# EUROPÄISCHE PATENTSCHRIFT

(11) **EP 1 797 359 B1**
(45) Veröffentlichungstag und Bekanntmachung des Hinweises auf die Patenterteilung: **10.12.2008**
(21) Anmeldenummer: 05762855.4
(22) Anmeldetag: 27.05.2005
(51) Int. Cl.: F16J 15/12, F02F 11/00

(54) **DICHTUNG**
SEAL
JOINT

(30) Priorität: 22.06.2004 DE 102004030203
(43) Veröffentlichungstag der Anmeldung: 20.06.2007
(73) Patentinhaber: Federal-Mogul Sealing Systems Bretten GmbH, 75015 Bretten (DE)
(72) Erfinder: SALAMEH, Ralf, 75053 Gondelsheim (DE)
(74) Vertreter: Kurig, Thomas
(86) Internationale Anmeldenummer: PCT/DE2005/000954
(87) Internationale Veröffentlichungsnummer: WO 2005/124199

(56) Entgegenhaltungen:
- EP-A- 0 602 398
- EP-A- 1 045 174
- DE-A1- 4 314 184
- FR-A- 2 526 864
- US-A- 5 462 288

## Beschreibung

Die Erfindung betrifft eine Dichtung zum gleichzeitigen radialen und axialen Abdichten von Bauteilöffnungen. Ein wesentlichen Stand der Technik ist durch Dokument EP 1 045 174 A gegeben.

Statisch wirkende Dichtsysteme gehören zum allgemeinen Stand der Technik und sind in der Regel dafür vorgesehen, Bauteilöffnungen gegen das Eindringen von Schmutz, Flüssigkeit oder dergleichen abzudichten. Vielfach werden jedoch auch Dichtsysteme benötigt, die gleichzeitig Bauteilöffnungen verschließen sollen, gleichzeitig jedoch auch in einer anderen Ebene angeordnete Bauteilöffnungen, zur Aufnahme beispielsweise von Stellmotoren, Sensoren, Stecker oder dergleichen, gleichermaßen abzudichten, so dass hier besondere Anforderungen an die gesamte Dichtung, respektive deren einzelne Bauteile, zu stellen sind.

Der Erfindung liegt die Aufgabe zugrunde, Öffnungen in einem Bauteil axial abzudichten und in gleicher Weise mindestens eine Durchführung durch die Dichtung mit zu integrieren, wobei gleichzeitig eine Abdichtung axial zum Bauteil hin und radial zum durchzuführenden Teil gegeben sein soll.

Diese Aufgabe wird gelöst durch eine Dichtung gemäß Patentanspruch 1.

Vorteilhafte Weiterbildungen des Erfindungsgegenstandes sind den Unteransprüchen zu entnehmen.

Der Trägerrahmen kann hierbei aus Metall oder Kunststoff bestehen und besitzt mindestens einen Knick, um der Bauteilgeometrie folgen zu können. Um eine definierte Verpressung einzustellen, sind im Bereich der Befestigungslöcher Abstandshalter aus dem Material des Trägerrahmens herausgeformt. Zur Vermeidung von Kippbewegungen ist der Trägerrahmen außerhalb der axial wirkenden Dichtbereiche mit in Richtung der axial wirkenden Dichtbereiche verlaufenden Abkröpfungen versehen. Dies stellte eine exakte Dichtspaltbegrenzung auch über den Knickbereich sicher. Bestimmte Vertiefungen im Trägerrahmen stellen darüber hinaus eine ausreichende Steifigkeit desselben sicher.

Auf diesem Trägerrahmen werden bauteilseitg zwei Dichtbereiche aufgespritzt, die in axialer Richtung Bauteilöffnungen verschließen. Diese sind vorteilhafterweise von unten auf den Trägerrahmen aufgespritzt und verschließen somit die Öffnungen im Bauteil. Im Bereich des Durchtrittes, beispielsweise für Stellmotoren, Sensoren oder Stecker von elektrischen Bauteilen, ist einerseits der axial wirkende Dichtbereich gegenüber dem Bauteil gegeben und andererseits mindestens ein radial umlaufender Dichtwulst für das durchgeführte Bauteil vorgesehen.

Sofern die Durchführung nicht rechtwinklig zur Ebene des Trägerrahmens, respektive des zugehörigen Teilbereiches, erfolgen soll, ist der Bereich des oder der radial wirkenden Dichtwulste auch unter einem bestimmten Winkel zu dieser Ebene angeordnet.

Die beiden axial wirkenden Dichtbereiche sind einerseits über Fließkanäle miteinander verbunden und laufen in den radial wirkenden Dichtbereich aus, so dass nicht an mehreren Stellen angespritzt werden muss, vielmehr in einem Arbeitsgang die gesamte Dichtgeometrie erzeugt werden kann.

Die Befestigungslöcher, über welche der Trägerrahmen am Bauteil befestigt wird, sind vorteilhafterweise als Langlöcher ausgeführt, damit eine Zentrierung am Bauteil stattfinden kann, bevor die Schrauben fest angezogen werden.

Zum Einsatz können je nach Anwendungsfall unterschiedliche Elastomermaterialien gelangen. Bedarfsweise können auch unterschiedliche Elastomermaterialien an einem Trägerrahmen eingesetzt werden, falls dies die abzudichtenden Medien erfordern.

Der Erfindungsgegenstand ist bevorzugt dort einsetzbar, wo eine Abdichtung auf Flächen notwendig ist, die nicht in einer Ebene liegen. Dies können beispielsweise Ventildeckel von Verbrennungskraftmaschinen oder dergleichen sein.

Der Erfindungsgegenstand ist anhand eines Ausführungsbeispieles in der Zeichnung dargestellt und wird wie folgt beschrieben. Es zeigen:
Figur 1 Perspektivische Darstellung der erfindungsgemäßen Dichtung
Figur 2 Dichtung gemäß Figur 1 von oben
Figur 3 Dichtung gemäße Figur 1 von unten
Figur 4 Schnitt durch die Dichtung gemäß Figur 1

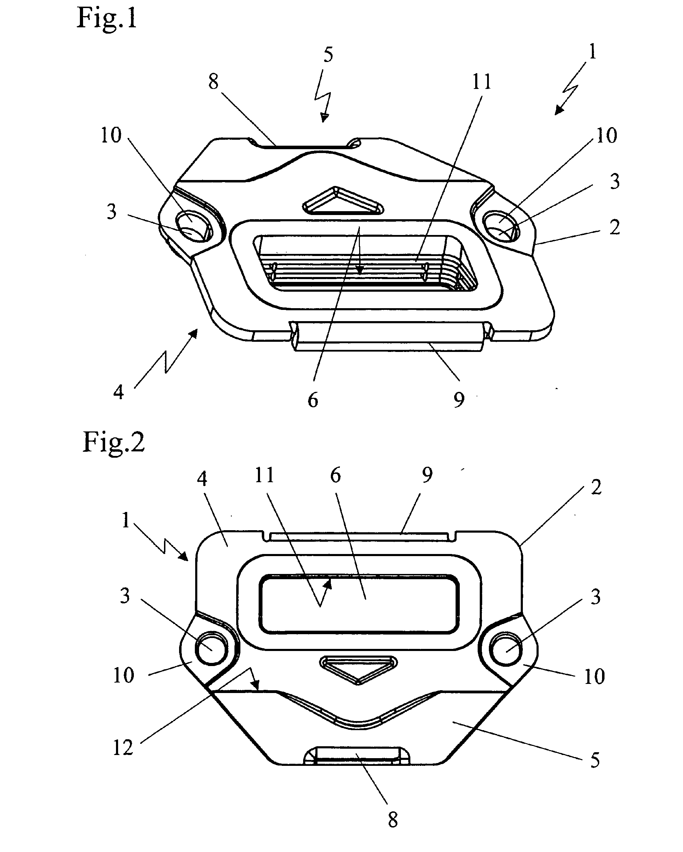

Figur 1 zeigt die erfindungsgemäße Dichtung 1 in perspektivischer Darstellung. Die Dichtung 1 beinhaltet in diesem Beispiel einen metallischen Trägerrahmen 2, der als Langlöcher ausgebildete Befestigungslöcher 3 aufweist und der unter einem Winkel zueinander verlaufende einteilig miteinander verbundene Teilbereiche 4, 5 beinhaltet. Im Teilbereich 4 ist eine Durchgangsöffnung 6 vorgesehen. Die Teilbereiche 4, 5 sind mit Abkröpfungen 8, 9 versehen. Im Bereich der Befestigungslöcher 3 sind Abstandshalter 10 aus dem Material des Trägerrahmens 1 herausgeformt, die sich in Richtung der Abkröpfungen 8, 9 erstrecken. Da in dieser perspektivischen Darstellung nicht sämtliche Dichtbereiche erkennbar sind, werden selbige in den folgenden Figuren näher beschrieben.

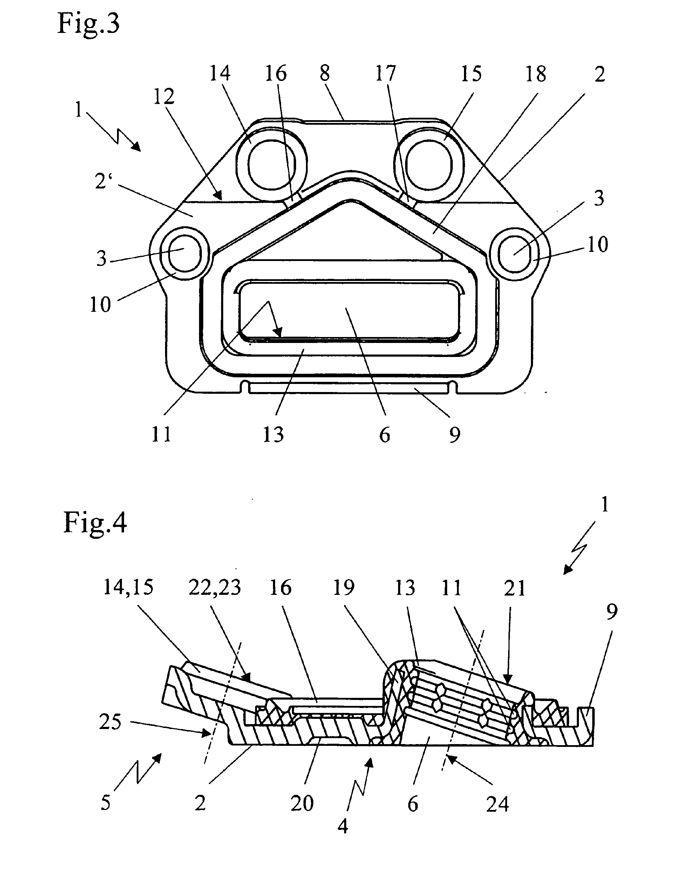

Die Figuren 2 und 3 zeigen die Dichtung 1 gemäß Figur 1 zum einem von oben (Figur 2) und zum anderen von unten (Figur 3). Erkennbar ist der Trägerrahmen 2, die Befestigungslöcher 3 samt Abstandshalter 10, die Durchgangsöffnung 6 sowie die Abkröpfungen 8, 9. In Figur 2 ist erkennbar, dass die Durchgangsöffnung 6 von mindestens einem umlaufend ausgebildeten Dichtwulst 11 umgeben ist. Die in diesem Beispiel rechteckig ausgebildete Durchgangsöffnung 6 befindet sich im Teilbereich 4 des Trägerrahmens 2. Mit dem Bezugszeichen 12 ist eine Knickstelle definiert, so dass der Teilbereich 5 gegenüber dem Teilbereich 4 entsprechend der Geometrie des nicht weiter dargestellten abzudichtenden Bauteiles unter einem vorgebbaren Winkel verläuft.

Figur 3 zeigt die Dichtung 1 von unten. Erkennbar sind axial wirkende Dichtbereiche 13, 14, 15, die über Fließkanäle 16, 17, 18 miteinander in Wirkverbindung stehen und bedarfsweise weitere Dichtbereiche bilden. Mit den zwar auf der gleichen Seite 2` des Trägerrahmens 2 angeordnete, jedoch in unterschiedlichen Ebenen axial wirkenden Dichtbereichen 13, 14, 15 können am Bauteil vorgesehene Öffnungen abgedichtet werden, wobei die axial wirkenden Dichtbereiche 14, 15 die zugehörigen Öffnungen verschließen, während die Durchgangsöffnung 6 im Trägerrahmen 2 zur Durchführung, beispielsweise eines Steckers eines elektrischen Bauteiles, dient. Auch hier ist der radial wirkende Dichtbereich in Form des umlaufenden Dichtwulstes 11 erkennbar, der in dichtender Weise an der gegenüberliegenden Oberfläche des nicht weiter dargestellten Steckers dichtend anliegt.

Figur 4 zeigt einen Querschnitt durch die Dichtung 1 gemäß Figur 1. Dargestellt ist der Trägerrahmen 2, der über einen horizontal verlaufenden Teilbereich 4 und einen dazu unter einem Winkel verlaufenden Teilbereich 5 verfügt. Die Durchgangsöffnung 6 beinhaltet einen ausgeformten Bereich 19, der ebenfalls unter einem vorgebbaren Winkel zur horizontalen Ebene des Teilbereiches 4 verläuft. In diesem Schnitt ist erkennbar, dass der radial wirkende Dichtbereich mehrere axial übereinander angeordnete radial wirkende Dichtwülste 11 beinhaltet, die (hier nicht dargestellt) an dem hindurch zu führenden Bauteil, beispielsweise einem Stecker, dichtend zur Anlage kommen. Die Dichtwülste 11 umgreifen die im nicht weiter dargestellten Bauteil vorhandene Aufnahmeöffnung für den Stecker, während der axial wirkende Dichtbereich 14, 15 die in einer anderen Ebene vorgesehenen gegenüberliegenden Bauteilöffnungen dichtend abschließt. Diese Öffnungen können beispielsweise Service-Öffnungen für Einstellarbeiten oder dergleichen sein. Mit dem Bezugszeichen 16 sind die Fließkanäle zwischen den axial wirkenden Dichtbereichen 13, 14, 15 angesprochen.

In diesem Schnitt erkennbar ist die Abkröpfung 9 sowie ein der Versteifung des Trägerrahmens 2 dienender Prägebereich 20. Die axial wirkenden Dichtbereiche 13, 14, 15 laufen bauteilseitig in Dichtlippen 21, 22, 23 aus. Die Teilbereiche 4, 5 sind in diesem Beispiel dergestalt zueinander versetzt angeordnet, dass die Mittellinie 24 der Durchgangsöffnung 6 etwa parallel zur Mittellinie 25 der statisch wirkenden Dichtbereiche 14, 15 verläuft.

## Patentansprüche

1. Dichtung, beinhaltend einen Befestigungslöcher (3) aufweisenden Trägerrahmen (2), der gegebenenfalls unter einem Winkel zueinander verlaufende miteinander einstückig verbundene Teilbereiche (4,5) aufweist, wobei zumindest in einem der Teilbereiche (4) mindestens ein radial und mindestens ein axial wirkender Dichtbereich (13) mit einer Durchgangsöffnung (6) vorgesehen ist und mindestens ein weiterer Teilbereich (5) über mindestens einen axial wirkenden Dichtbereich (14, 15) verfügt, wobei die axial wirkenden Dichtbereiche (13, 14, 15) einzelner Teilbereiche (4,5) auf der gleichen Seite (2') des Trägerrahmens (2) vorgesehen sind
wobei
der axial wirkende Dichtbereich (13) in einen radial wirkenden Dichtbereich ausläuft; der radial wirkende Dichtbereich über mindestens einen umlaufenden Dichtwulst (11) verfügt;
die axial wirkenden Dichtbereiche (13, 14, 15) über Fliesskanäle (16, 17, 18) miteinander verbunden sind; und
sämtliche Dichtbereiche (13, 14, 15, 11) in einem Arbeitsgang durch Anspritzen an den Trägerrahmen (2) erzeugt sind.

2. Dichtung nach Anspruch 1, **dadurch gekennzeichnet, dass** die Durchgangsöffnung (6) nach Art eines Topfes (19) ausgebildet ist, der unter einem vorgebbaren Winkel zur Ebene des zugehörigen Teilbereiches (4) versetzt vorgesehen ist.

3. Dichtung nach Anspruch 1 oder 2, **dadurch gekennzeichnet, dass** zumindest zwei der Teilbereiche (4, 5) dergestalt versetzt zueinander stehen, dass die Mittellinien (24, 25) der axial wirkenden Dichtbereiche (13, 14, 15) im Wesentlichen parallel zueinander verlaufen.

4. Dichtung nach einem der Ansprüche 1 bis 3, **dadurch gekennzeichnet, dass** im Bereich der insbesondere als Langlöcher ausgebildeten Befestigungslöcher (3) in Richtung des abzudichtenden Bauteiles wirkende Abstandshalter (10) aus dem Material des zugehörigen Teilbereiches (4) des Trägerrahmens (2) herausgeformt sind.

5. Dichtung nach einem der Ansprüche 1 bis 4, **dadurch gekennzeichnet, dass** der Trägerrahmen (2) außerhalb der axial wirkenden Dichtbereiche (13, 14, 15) in Randbereichen jeweils mit mindestens einer in Richtung des jeweiligen axial wirkenden Dichtbereiches (13, 14, 15) verlaufenden Abkröpfung (8, 9) versehen ist.

6. Dichtung nach einem der Ansprüche 1 bis 5, einsetzbar als Deckeldichtung eines Ventildeckels im Bereich einer Verbrennungskraftmaschine.

## Claims

1. Gasket comprising a substrate frame (2) having fixing holes (3), said frame, if necessary, having partial areas (4, 5) running at an angle to one another and joined to each other in one piece, whereby in at least one of the partial areas (4) at least one sealing region (13) that acts radially and at least one sealing region (13) that acts axially is provided with a through hole (6) and at least one further partial area (5) has at least one sealing region (14, 15) that acts axially, wherein the sealing regions (13, 14, 15) of individual partial areas (4, 5) that act axially are provided on the same side (2') of the substrate frame (2)
whereby
the sealing region (13) that acts axially tapers off into a sealing region that acts radially;
the sealing region that acts radially has at least one circumferential sealing bead (11);
the sealing regions (13, 14, 15) that act axially are joined to one another by way of flow channels (16, 17, 18); and
all sealing regions (13, 14, 15, 11) are produced in one operation by spraying onto the substrate frame (2).

2. Gasket according to claim 1, **characterised in that** the through hole (6) is formed in the manner of a pot (19) which is provided offset at a definable angle to the plane of the associated partial area (4).

3. Gasket according to claim 1 or 2, **characterised in that** at least two of the partial areas (4, 5) are offset in relation to one another in such a manner that the centre lines (24, 25) of the sealing regions (13, 14, 15) that act axially run substantially parallel to one another.

4. Gasket according to one of claims 1 to 3, **characterised in that** in the region of the fixing holes (3), formed particularly as long slots, spacers (10) acting in the direction of the component to be sealed are formed from the material of the associated partial area (4) of the substrate frame (2).

5. Gasket according to one of claims 1 to 4, **characterised in that** the substrate frame (2) outside the sealing regions (13, 14, 15) that act axially is provided in each case in marginal regions with at least one offset (8, 9) running in the direction of the relevant sealing region (13, 14, 15) that acts axially.

6. Gasket according to one of claims 1 to 5, usable as a cover gasket of a valve cover in the vicinity of an internal combustion engine.

## Revendications

1. Garniture d'étanchéité, comprenant un cadre de support (2) présentant des trous de fixation (3) et présentant éventuellement des zones partielles (4, 5) s'étendant sous un angle l'une par rapport à l'autre et reliées ensemble d'une seule pièce, dans laquelle, dans au moins l'une des zones partielles (4), au moins une zone d'étanchéité à effet radial (13) et au moins une zone d'étanchéité à effet axial (13) avec une ouverture de passage (6) sont prévues, et au moins une autre zone partielle (5) dispose d'au moins une zone d'étanchéité (14, 15) à effet axial, dans laquelle les zones d'étanchéité à effet axial (13, 14, 15) de zones partielles individuelles (4, 5) sont prévues du même côté (2') du cadre de support (2),
dans laquelle,
■ la zone d'étanchéité à effet axial (13) se termine par une zone d'étanchéité à effet radial ;
■ la zone d'étanchéité à effet radial dispose d'au moins un bourrelet d'étanchéité périphérique (11) ;
■ les zones d'étanchéité à effet axial (13, 14, 15) sont reliées entre elles par des canaux d'écoulement (16, 17, 18) ; et
■ toutes les zones d'étanchéité (13, 14, 15, 11) sont générées dans une opération de travail par surmoulage sur le cadre de support (2).

2. Garniture d'étanchéité selon la revendication 1, **caractérisée en ce que** l'ouverture de passage (6) est réalisée à la manière d'un pot (19) qui est prévu de façon décalée sous un angle pré-définissable par rapport au plan de la zone partielle associée (4).

3. Garniture d'étanchéité selon la revendication 1 ou 2, **caractérisée en ce qu'**au moins deux des zones partielles (4, 5) se trouvent décalées l'une par rapport à l'autre de telle sorte que les lignes médianes (24, 25) des zones d'étanchéité à effet axial (13, 14, 15) s'étendent substantiellement en parallèle les unes aux autres.

4. Garniture d'étanchéité selon l'une quelconque des revendications 1 à 3, **caractérisée en ce que** dans la zone des trous de fixation (3), réalisés en particulier comme des trous oblongs, des écarteurs (10) agissant dans la direction du composant à rendre étanche, sont formés à partir d'un matériau de la zone partielle (4) associée du cadre de support (2).

5. Garniture d'étanchéité selon l'une quelconque des revendications 1 à 4, **caractérisée en ce que** le cadre, de support (2), en dehors des zones d'étanchéité à effet axial (13, 14, 15), dans des zones périphériques, est muni respectivement d'au moins un coude (8, 9) s'étendant dans la direction de la zone d'étanchéité à effet axial (13, 14, 15) respective.

6. Garniture d'étanchéité selon l'une quelconque des revendications 1 à 5, utilisable comme une garniture de chapeau d'un chapeau de soupape au niveau d'un moteur à combustion interne.
